# EUROPÄISCHE PATENTANMELDUNG

(11) **EP 2 637 284 A2**
(43) Veröffentlichungstag der Anmeldung: **11.09.2013**
(21) Anmeldenummer: 13151787.2
(22) Anmeldetag: 18.01.2013
(51) Int. Cl.: H02J 13/00

(54) **Elektrisches Steuermodul**

(30) Priorität: 05.03.2012 DE 102012101808
(71) Anmelder: Insta Elektro GmbH, 58509 Lüdenscheid (DE)
(72) Erfinder: Schlicht, Thomas, 58093 Hagen (DE); Stecura, Darius, 45731 Waltrop (DE)

(57) **Zusammenfassung**

Es wird ein elektrisches Steuermodul mit einer Bedieneinheit vorgeschlagen, welches zur bedarfsgerechten Beeinflussung von in Gebäuden installierten Aktoren eine Bedienrichtungserkennungsstufe und eine Bediengrößenerkennungsstufe aufweist. Zu dem Zweck, ein elektrisches Steuermodul zu schaffen, welches für den Benutzer auf besonders einfache Art und Weise die Beeinflussung von Aktoren der Gebäudesystemtechnik reproduzierbar und vorhersehbar, beziehungsweise intuitiv erlaubt und bei welchem gleichzeitig besonders einfach wunschgemäß eine weitgehend unterbrechungsfreie Beeinflussung der zugehörigen, beziehungsweise angeschlossenen Aktoren sichergestellt ist, weist die Bedieneinheit zur Ausfilterung von ungewollten kurzzeitigen Beeinflussungsunterbrechungen an den Aktoren zumindest eine, die Dauer von Bedienunterbrechungen erfassende und/oder bewertende, erste Erfassungseinrichtung auf.

## Beschreibung

Die vorliegende Erfindung geht von einem gemäß Oberbegriff des Hauptanspruches konzipierten elektrischen Steuermodul aus.

Derartige Steuermodule sind in der Regel dafür vorgesehen, eine Vielzahl von in Gebäuden installierte elektrische Aktoren (Jalousieantriebe, Beleuchtungseinrichtungen, Fühler, Wächter usw.) bedarfsgerecht zu beeinflussen. Zu diesem Zweck sind die unterschiedlichsten Steuermodule wie Schalter, Taster, Dimmer usw. bekannt geworden. Zur Beeinflussung werden üblicherweise vom Benutzer an den Bedienelementen bzw. der Bedieneinheit Bediengrößen eingestellt, die an die zugeordneten Aktoren zu deren Beeinflussung übertragen werden. Die Übertragung kann drahtgebunden oder aber drahtlos z. B. per Funk erfolgen. Bei Steuermodulen, die als sogenannte Drehschalter bzw. Drehgeber ausgeführt sind, befindet sich oftmals ein Bedienelement drehbar auf einer Achse gelagert, wobei zum Ein- und Ausschalten des Steuermoduls oftmals das Bedienelement in Art eines Drucktasters auch axial betätigt werden kann. Oftmals ist zumindest ein Funktionsbereich derartiger Steuermodule als sogenannter Inkrementalgeber ausgeführt.

Durch die DE 199 40 273 B4 ist ein dem Oberbegriff des Hauptanspruches entsprechendes elektrisches Steuermodul bekannt geworden. Dieses elektrische Steuermodul weist ein auf einer Achse gelagertes Drehbetätigungsorgan auf und ist zur Beeinflussung einer Beleuchtungseinrichtung vorgesehen, welche über Haupt-und Nebenstellen bedient werden kann. Über das Drehbetätigungsorgan kann dabei durch Linksdrehung um einen definierten kleinen Winkel die Beleuchtungseinrichtung mit minimaler Helligkeit eingeschaltet werden und durch Rechtsdrehung um einen definierten kleinen Winkel auf maximale Helligkeit eingeschaltet werden. Damit weist ein solches Steuermodul zur bedarfsgerechten Beeinflussung der angeschlossenen Beleuchtungseinrichtung sowohl eine Bedienrichtungserkennungsstufe als auch eine Bediengrößenerkennungsstufe auf. Ein solches Bedienverfahren führt jedoch in manchen Fällen beim Benutzer zu Irritationen, auch ist nicht immer sichergestellt, dass wunschgemäß eine unterbrechungsfreie Beeinflussung der zugehörigen beziehungsweise angeschlossenen Aktoren gelingt.

Zudem ist durch die DE 10 2007 060 706 B3 ein Steuermodul bekannt geworden, dessen als Drehknauf ausgebildetes Bedienelement mit einer die Drehstellungen markierenden Rasteinrichtung zusammenwirkt und welches zusätzlich wie eine Drucktaste betätigt werden kann.

Ausgehend von derart ausgebildeten elektrischen Steuermodulen liegt der vorliegenden Erfindung die Aufgabe zugrunde, ein elektrisches Steuermodul zu schaffen, welches für den Benutzer auf besonders einfache Art und Weise die Beeinflussung von Aktoren der Gebäudesystemtechnik reproduzierbar und vorhersehbar, beziehungsweise intuitiv erlaubt und wobei gleichzeitig besonders einfach wunschgemäß eine weitgehend unterbrechungsfreie Beeinflussung der zugehörigen beziehungsweise angeschlossenen Aktoren sichergestellt ist.

Erfindungsgemäß wird diese Aufgabe durch die im Hauptanspruch angegebenen Merkmale gelöst.

Bei einer solchen Ausbildung ist besonders vorteilhaft, dass identisch ausgebildete Steuermodule auf einfache Art und Weise für eine bedarfsgerechte Beeinflussung von unterschiedlich ausgeführten, beziehungsweise verschiedenen Gewerken zugeordneten, Aktoren der Gebäudesystemtechnik Verwendung finden können.

Zudem ist besonders vorteilhaft, wenn eine Parametrierstufe vorgesehen ist und mehrere Bediengrößenbereiche definiert werden, damit dem Benutzer auf einfache Art und Weise zwei unterschiedliche Bedienkonzepte mittels eines Steuermoduls zur Verfügung gestellt werden können.

Weitere vorteilhafte Ausgestaltungen des erfindungsgemäßen Gegenstandes sind in den Unteransprüchen angegeben. Anhand zweier Ausführungsbeispiele sei die Erfindung im Prinzip näher erläutert. Dabei zeigen:
- Fig. 1:: prinziphaft ein mit einem Drehgeber ausgerüstetes Steuermodul gemäß erstem Ausführungsbeispiel als Blockschaltbild;
- Fig. 2:: prinziphaft ein mit einem Drehgeber ausgerüstetes Steuermodul gemäß zweitem Ausführungsbeispiel als Blockschaltbild;
- Fig. 3:: ein Diagramm der Bediengrößenbereiche bei Rechtsdrehung des Bedienelementes;
- Fig. 4:: ein Diagramm der Bediengrößenbereiche bei Linksdrehung des Bedienelementes.

Wie aus den Zeichnungen hervorgeht, besteht ein derartiges, im Wesentlichen als Drehgeber ausgeführtes, elektrisches Steuermodul hauptsächlich aus einer Bedieneinheit 1, dessen Bedienelement 2 auf einer drehbaren Achse 3 gelagert ist. Das Bedienelement 2 der Bedieneinheit 1 ist als Drehknauf ausgebildet und anschlagfrei, das heißt endlos verdrehbar, weshalb dieser Funktionsbereich der Bedieneinheit 1 als Inkrementalgeber ausgeführt ist. Zum Beeinflussen von Aktoren kann das als Drehknauf ausgebildete Bedienelement 2 zusätzlich in axialer Richtung in Art eines Drucktasters betätigt werden.

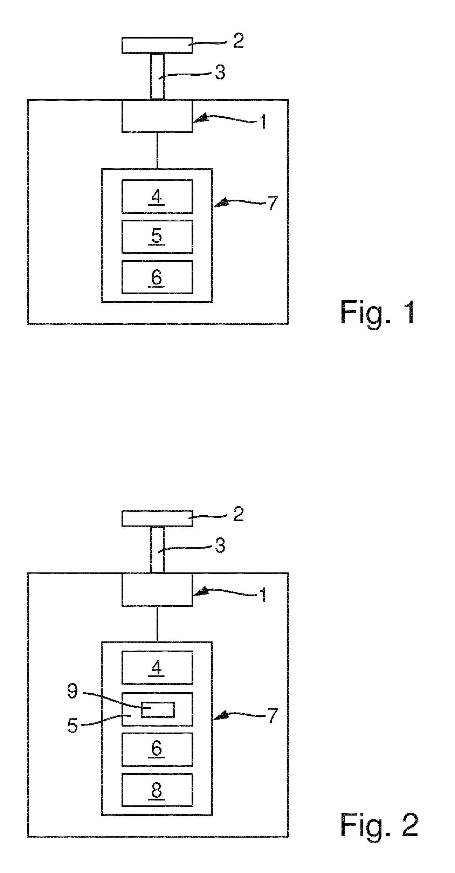

Wie insbesondere aus Figur 1 hervorgeht, ist der Bedieneinheit 1 eine Bedienrichtungserkennungsstufe 4, eine Bediengrößenerkennungsstufe 5 und eine die Dauer von Betätigungsunterbrechungen erfassende erste Erfassungseinrichtung 6 zugeordnet. Die Bedienrichtungserkennungsstufe 4 und die Bediengrößenerkennungsstufe 5 sind wie üblich dafür vorgesehen, dass der Benutzer mittels der Bedieneinheit 1 auf einfache Art und Weise durch Rechtsdrehung oder Linksdrehung des Bedienelementes 2 eine bedarfsgerechte Beeinflussung zugeordneter beziehungsweise angeschlossener Aktoren vornehmen kann. Die erste Erfassungseinrichtung 6 ist dafür vorgesehen, kurzzeitige ungewollte Beeinflussungsunterbrechungen an den Aktoren zu vermeiden. Dies wird dadurch erreicht, weil vom Benutzer unbeabsichtigte, kurze Bedienunterbrechung (zum Beispiel kleiner als 0,5 Sekunden) des als Drehknauf ausgebildeten Bedienelementes 2 nicht zu einer Beeinflussungsunterbrechung an den Aktoren führen. Dies ist der Fall, weil trotz solcher kurzzeitigen Unterbrechungen die Beeinflussung der Aktoren kontinuierlich weiter fortgeführt wird. Es ist somit sichergestellt, dass auf einfache Art und Weise die Beeinflussungen angeschlossener Aktoren bzw. Applikationen, wie vom Benutzer gewünscht, unterbrechungsfrei beziehungsweise kontinuierlich ausgeführt werden. Werden Bedienunterbrechungen (größer als 0,5 Sekunden) festgestellt, so erfolgt - wie üblich - eine schrittweise Beeinflussung der zugeordneten bzw. angeschlossenen Aktoren, entsprechend der Schrittweite, die durch die Verdrehung des Bedienelementes 2 vorgegeben wird. Die Bedienrichtungserkennungsstufe 4, die Bediengrößenerkennungsstufe 5 und die erste Erfassungseinrichtung 6 sind Bestandteil eines der Bedieneinheit 1 zugehörigen Mikrocontrollers 7.

Wird mit einem vorstehend beschriebenen Steuermodul gemäß erstem Ausführungsbeispiel beispielsweise eine Beeinflussung an als Jalousien ausgebildeten Aktoren vorgenommen, ist sichergestellt, dass diese trotz kurzzeitiger, durch den Benutzer verursachter, Bedienunterbrechungen (z. B. kleiner als 0,5 Sekunden) eine kontinuierlich, das heißt ruckfreie Verstellung der Jalousien, wie vom Benutzer gewünscht, erfolgt. Die Verstellung bei Jalousien kann sowohl das Hoch-oder das Runterfahren als auch das Auf- oder das Zustellen der Jalousielamellen betreffen. Wird das Bedienelement 2 vom Benutzer hingegen bewusst schrittweise verdreht, d.h. mit einer Bedienunterbrechung (größer als 0,5 Sekunden), so erfolgt auch eine schrittweise Verstellung der Jalousie, wie vom Benutzer gewünscht.

Die Dauer einer Bedienunterbrechung zwischen zwei Bedienungen ist einstellbar und gibt vor, ob es sich um eine neu zu erkennende Bedienung handelt oder ob die bereits erkannte Bedienung fortgesetzt wird.

Wie insbesondere aus Figur 2 hervorgeht, ist der Bedienvorrichtung 1 eine Bedienrichtungserkennungsstufe 4, eine Bediengrößenerkennungsstufe 5, eine die Dauer von Betätigungsunterbrechungen erfassende erste Erfassungseinrichtung 6 und eine zur Einstellung von zwei verschiedenen Bedienkonzepten vorgesehene Parametrierstufe 8 zugeordnet. Die Bedienrichtungserkennungsstufe 4 und die Bediengrößenerkennungsstufe 5 sind wie üblich dafür vorgesehen, dass der Benutzer mittels der Bedieneinheit 1 durch Rechtsdrehung oder Linksdrehung des Bedienelementes 2 auf einfache Art und Weise eine bedarfsgerechte Beeinflussung zugeordneter, beziehungsweise angeschlossener, Aktoren vornehmen kann. Die erste Erfassungseinrichtung 6 ist dafür vorgesehen, kurzzeitige ungewollte Beeinflussungsunterbrechungen an den Aktoren zu vermeiden. Dies wird dadurch erreicht, weil vom Benutzer unbeabsichtigte, kurze Bedienunterbrechung (zum Beispiel kleiner als 0,5 Sekunden) des als Drehknauf ausgebildeten Bedienelementes 2, nicht als solche bewertet werden und somit nicht zu einer Beeinflussungsunterbrechung an den Aktoren führen. Dies ist der Fall, weil trotz solcher kurzzeitigen Unterbrechungen die Beeinflussung der Aktoren kontinuierlich fortgeführt wird. Es ist somit sichergestellt, dass auf einfache Art und Weise die Beeinflussungen angeschlossener Aktoren bzw. Applikationen, wie vom Benutzer gewünscht, unterbrechungsfrei beziehungsweise kontinuierlich ausgeführt werden. Werden Bedienunterbrechungen (größer als 0,5 Sekunden) festgestellt, so erfolgtwie üblich - eine schrittweise Beeinflussung der zugeordneten bzw. angeschlossenen Aktoren, entsprechend der Schrittweite, die durch die Verdrehung des Bedienelementes 2 vorgegeben wird. Diese Art der Bedienung entspricht dem ersten Bedienkonzept, welches vorstehend hinsichtlich des ersten Ausführungsbeispieles schon näher beschrieben wurde.

Zur Realisierung eines zweiten Bedienkonzeptes ist in der Bediengrößenerkennungsstufe 5 ein Speicher 9 zur Speicherung von vier vordefinierten Bediengrößenbereichen B1 bis B4 vorhanden. Die Bediengrößenerkennungsstufe 5 erkennt zudem den Drehweg, um den das Bedienelement 2 verdreht wurde. Eine solche Ausführung erlaubt, dass durch das elektrische Steuermodul gemäß zweitem Ausführungsbeispiel dem Benutzer auf einfache Art und Weise zwei unterschiedliche Bedienkonzepte zur Verfügung gestellt werden können. Der Benutzer kann wunschgemäß eines der beiden Bedienkonzepte auswählen und in der Parametrierstufe 8 einstellen. Die Bedienrichtungserkennungsstufe 4, die Bediengrößenerkennungsstufe 5, die erste Erfassungseinrichtung 6 und die Parametrierstufe 8 sind Bestandteil eines der Bedieneinheit 1 zugehörigen Mikrocontrollers 7.

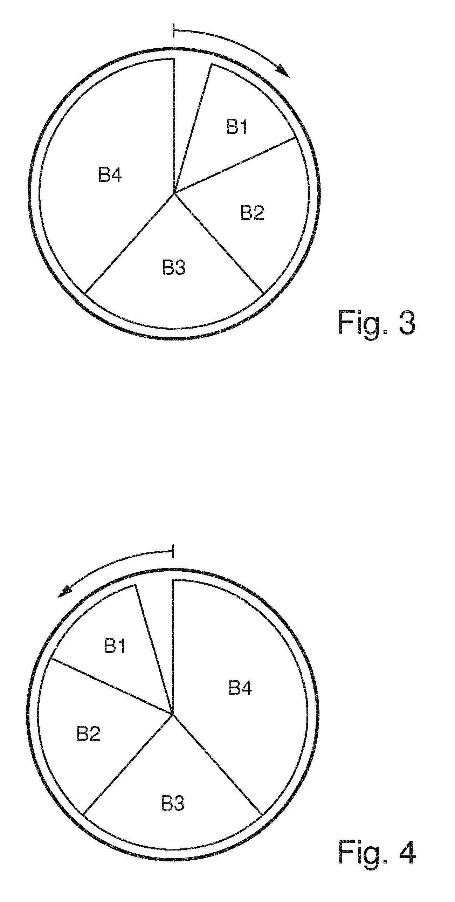

Wie insbesondere aus Figur 3 und Figur 4 hervorgeht, sind zur Realisierung des zweiten Bedienkonzeptes vier vordefinierte Bediengrößenbereiche B1 bis B4 vorgesehen. Der erste Bediengrößenbereich B1 beim vorliegenden zweiten Ausführungsbeispiel umfasst dabei alle Werte zwischen ± 30 Grad und ± 69 Grad, der zweite Bediengrößenbereich B2 umfasst alle Werte zwischen ± 70 Grad und ± 129 Grad, der dritte Bediengrößenbereich B3 umfasst alle Werte zwischen ± 130 Grad und ± 189 Grad und der vierte Bediengrößenbereich B4 umfasst alle Werte, die größer sind als ± 190 Grad. Die diesen vier Bediengrößenbereichen B1 bis B4 zugeordneten Beeinflussungsgrößen für die Beeinflussung der Aktoren entsprechen beim ersten Bediengrößenbereich B1 einer Beeinflussungsgröße von 12,5 %, beim zweiten Bediengrößenbereich B2 einer Beeinflussungsgröße von 25 %, beim dritten Bediengrößenbereich B3 einer Beeinflussungsgröße von 50 % und beim vierten Bediengrößenbereich B4 einer Beeinflussungsgröße von 100 %. Das bedeutet, wird das Bedienelement 2 der Bedieneinheit 1 bedienunterbrechungsfrei um einen bestimmten Drehweg (Rechtsdrehung oder Linksdrehung) verdreht, und kommt dabei letztendlich in einem der vier Bediengrößenbereich B1 bis B4 mit erkannter Bedienunterbrechung zu stehen, erfolgt die Beeinflussung des zugehörigen beziehungsweise angeschlossenen Aktors entsprechend der diesem Bediengrößenbereich B1 bis B4 zugeordneten Beeinflussungsgröße von 12,5 %, 25 %, 50 % oder 100 % unabhängig davon, auf welchem exakten Winkelwert das Bedienelement 2 in einem dieser vier Bediengrößenbereichen B1 bis B4 zu stehen kommt. Weil dieser Funktionsbereich als Inkrementalgeber ausgeführt ist, erfolgt nach jeder erkannten Bedienunterbrechung ein Neustart der Bediengrößenbereiche B1 bis B4 mit der Ausgangszuordnung wie in Figur 3 und Figur 4 dargestellt.

Auch beim zweiten Bedienkonzept besteht die Möglichkeit, eine Verstellung in kleinen Schritten durchzuführen. Diese Verstellung muss in dem Verstellbereich erfolgen, der vor dem voreingestellten ersten Bediengrößenbereich B1 liegt (0 bis ± 29 Grad) und darf maximal zwei Bedienschritte ohne Bedienunterbrechung umfassen. Eine in kleinen Schritten durchgeführte Verstellung des Bedienelementes 2 in diesem Verstellbereich führt dazu, dass eine schrittweise Veränderung innerhalb der projektierten Funktion ausgeführt wird beziehungsweise eine schrittweise Beeinflussung der zugehörigen beziehungsweise angeschlossenen Aktoren vorgenommen wird. Es findet dann eine Beeinflussung der Aktoren mit Beeinflussungsgrößen statt, die dem schrittweise ermittelten Drehwinkel des Bedienelementes 2 entsprechen.

Die Dauer (der Zeitbereich) einer Bedienunterbrechung zwischen zwei Bedienungen ist einstellbar und gibt vor, ob es sich um eine neu zu erkennende Bedienung handelt oder ob die bereits erkannte Bedienung fortgesetzt wird. Beim vorliegenden zweiten Ausführungsbeispiel ist, wie bereits erwähnt, die Dauer (der Zeitbereich) auf 0,5 Sekunden eingestellt.

Soll zum Beispiel gemäß zweitem Bedienkonzept mittels des elektrischen Steuermoduls ein als Beleuchtungsanlage ausgeführter Aktor durch Dimmen beeinflusst werden, ist sowohl eine schrittweise als auch eine bereichsweise Bedienung/Drehung des als Drehknauf ausgeführten Bedienelementes 2 möglich und bewirkt jeweils das Aussenden von entsprechenden Telegrammen zur Helligkeitsänderung an den Leuchtmitteln der Beleuchtungsanlage. Für die schrittweise (rastenweise) Bedienung ist eine kleine Schrittweite zur Helligkeitsänderung eingestellt. Durch die schrittweise Bedienung wird der Helligkeitswert in kleinen Schritten an den Leuchtmitteln der Beleuchtungsanlage verändert. Voraussetzung ist dabei, wie schon erwähnt, dass die Verstellung in dem Verstellbereich erfolgt, der vor dem ersten Bediengrößenbereich B1 angeordnet ist und maximal zwei Bedienschritte ohne Bedienunterbrechung umfasst.

Wird als Alternative vom Benutzer eine bereichsweise Bedienung vorgenommen, wird hingegen eine größere Änderung der Helligkeit der Leuchtmittel der Beleuchtungsanlage bewirkt. Wie groß diese Änderung ist, bestimmt der Umfang/Winkel, um den das Bedienelement 2 innerhalb der unterbrechungsfreien Bedienzeit verdreht wurde und der Bediengrößenbereich B1 bis B4, in dem das Bedienelement 2 mit erkannter Bedienunterbrechung zu stehen kommt. Maß für die Helligkeitsänderung an den Leuchtmitteln ist dann die dem entsprechenden Bediengrößenbereich B1 bis B4 zugeordnete Beeinflussungsgröße von 12,5 %, 25 %, 50 % oder 100 % des Helligkeitswertes, wie auch schon vorstehend beschrieben.

Soll zum Beispiel mittels eines elektrischen Steuermoduls gemäß zweitem Ausführungsbeispiel ein als Rollladen, Behang oder Jalousie ausgeführter Aktor beeinflusst werden, findet eine Beeinflussung der Aktoren statt, je nachdem, welches der beiden Bedienkonzepte in der Parametrierstufe 8 eingestellt worden ist. Wurde das zweite Bedienkonzept eingestellt, führt eine schrittweise Bedienung beziehungsweise Verdrehung des Bedienelementes 2 - bei Einhaltung der bereits vorstehend beschriebenen Voraussetzungen - zum Aussenden von Telegrammen, die eine Verstellung des Rollladens, des Behangs oder der Jalousie mit kleinen Änderungen, das heißt mit kleiner Schrittweite bewirken. Eine alternativ vorgenommene, bereichsweise Drehbedienung des Bedienelementes 2 über einen definierten Drehwinkel bewirkt das Aussenden von Telegrammen, welche eine vorgegebene Verstellung des Aktors (Rollladen, Behang, Jalousie) mit einem der den vier Bediengrößenbereich B1 bis B4 zugeordneten Beeinflussungsgrößen von 12,5 %, 25 %, 50 % oder 100 % bewirken, wie schon vorstehend beschrieben. Bei Rollladen, Behang und Jalousien muss oftmals sowohl die Höhenposition, als auch die Winkelstellung der Lamellen verstellt werden, was mittels eines solchen elektrischen Steuermoduls für den Benutzer auf einfache Art und Weise wunschgemäß erfolgen kann.

Das erste Bedienkonzept oder das zweite Bedienkonzept werden durch vorherige Parametrierung am Steuergerät eingestellt, so dass dem Benutzer wunschgemäß eindeutig zur Beeinflussung von Aktoren entweder das erste Bedienkonzept oder das zweite Bedienkonzept zur Verfügung steht.

## Patentansprüche

1. Elektrisches Steuermodul mit einer Bedieneinheit, die zur bedarfsgerechten Beeinflussung von in Gebäuden installierten Aktoren eine Bedienrichtungserkennungsstufe und eine Bediengrößenerkennungsstufe aufweist, **dadurch gekennzeichnet, dass** der Bedieneinheit (1) zur Ausfilterung von ungewollten kurzzeitigen Beeinflussungsunterbrechungen an den Aktoren zumindest eine, die Dauer von Bedienunterbrechungen erfassende und/oder bewertende, erste Erfassungseinrichtung (6) zugeordnet ist.

2. Elektrisches Steuermodul nach Anspruch 1, **dadurch gekennzeichnet, dass** die Dauer (der Zeitbereich), nach dessen Ablauf die erste Erfassungseinrichtung (6) eine Bedienunterbrechung tatsächlich als solche wertet, einstellbar ausgeführt ist.

3. Elektrisches Steuermodul nach Anspruch 1 oder 2, **dadurch gekennzeichnet, dass** der Bedieneinheit (1) zur Einstellung von zumindest zwei unterschiedlichen Bedienkonzepten, zumindest eine Parametrierstufe (8) zugeordnet ist.

4. Elektrisches Steuermodul nach einem der Ansprüche 1 bis 3, **dadurch gekennzeichnet, dass** der Bedieneinheit (1) zumindest eine, die Verstellgeschwindigkeit des Bedienelementes (2) erfassende, zweite Erfassungseinrichtung zugeordnet ist.

5. Elektrisches Steuermodul nach einem der Ansprüche 1 bis 4, **dadurch gekennzeichnet, dass** in der Bediengrößenerkennungsstufe (5) zur vordefinierten Beeinflussung von Aktoren zumindest zwei vordefinierte Bediengrößenbereiche in einem Speicher (9) abgelegt sind.

6. Elektrisches Steuermodul nach Anspruch 5, **dadurch gekennzeichnet, dass** im Speicher (9) der Bediengrößenerkennungsstufe (5) vier vordefinierte Bediengrößenbereiche abgelegt sind.

7. Elektrisches Steuermodul nach einem der Ansprüche 1 bis 6, **dadurch gekennzeichnet, dass** die Bedieneinheit (1) zumindest einen Mikrocontroller (7) aufweist.

8. Elektrisches Steuermodul nach einem der Ansprüche 1 bis 7, **dadurch gekennzeichnet, dass** zumindest ein Bedienelement (2) der Bedieneinheit (1) als Schiebeglied ausgeführt ist.

9. Elektrisches Steuermodul nach einem der Ansprüche 1 bis 8, **dadurch gekennzeichnet, dass** zumindest ein Bedienelement (2) der Bedieneinheit (1) als Fingerführungsbahn ausgeführt ist.

10. Elektrisches Steuermodul nach einem der Ansprüche 1 bis 9, **dadurch gekennzeichnet, dass** zumindest ein Bedienelement (2) der Bedieneinheit (1) als drehbar gelagerter Drehknauf ausgeführt ist.

11. Elektrisches Steuermodul nach einem der Ansprüche 1 bis 10, **dadurch gekennzeichnet, dass** zumindest ein Bedienelement (2) der Bedieneinheit (1) zusätzlich in Art eines Drucktasters betätigbar ist.

12. Elektrisches Steuermodul nach einem der Ansprüche 1 bis 11, **dadurch gekennzeichnet, dass** zumindest ein Funktionsbereich der Bedieneinheit (1) als Inkrementalgeber ausgeführt ist.
